# EUROPEAN PATENT SPECIFICATION

(11) **EP 0 358 624 B1**
(45) Date of publication and mention of the grant of the patent: **26.10.1994**
(21) Application number: 89850276.0
(22) Date of filing: 29.08.1989
(51) Int. Cl.: H04N 11/04

(54) **Process for transmitting information relating to moving pictures**
Verfahren zum Übertragen von Informationen in Abhängigkeit von sich bewegenden Bildern
Système de transmission d'informations concernant des images mobiles

(30) Priority: 09.09.1988 SE 8803185
(43) Date of publication of application: 14.03.1990
(73) Proprietor: TELIA AB, 123 86 Farsta (SE)
(72) Inventor: Brusewitz, Harald, S-123 86 Farsta (SE)
(74) Representative: Karlsson, Berne

(56) References cited:
- DE-C- 3 704 777
- US-A- 4 369 463
- US-A- 4 679 079
- US-A- 4 710 810

## Description

### Scope of the invention

The present invention relates to a process for transmitting information relating to moving pictures. The invention is particularly intended for pictures with moderate movement, for example in video telephony. The invention makes possible transmission on telephone lines with a transmission rate under 64 kbit/s with good picture quality.

### State of the art

The format which is usually used for this type of picture transmission comprises a block of 288 x 360 image points for the luminance signal (the black and white picture) and two blocks of 144 x 180 image points for the chrominance signals (the color signals). Instead of transmitting information relating to the value of each such image point for each picture, it is previously known to transmit information relating to the movement of the picture. The picture is divided into smaller blocks and for each block a movement vector is transmitted which indicates the movement of the block for the current picture in relation to the previous picture. In order to meet the transmission rate requirement, it has previously been necessary to use relatively large blocks and a small number of movement vectors, which has resulted in an unsatisfactory picture quality.

### Summary of the invention

The present invention relates to a process for transmitting information relating to moving pictures, which process has a good picture quality even at a low bit transmission rate. According to the invention, the picture is divided into so-called macro picture elements comprising a number of image points from the luminance block and the chrominance block which together represent a physical picture area. Since the probability is high that the movement vector which is to be transmitted for the current macro picture element is identical with one of the movement vectors of the adjoining macro picture elements, the information relating to the current movement vector is transmitted in the form of codes which indicate that it is identical with one of the adjoining movement vectors, if this is the case. Otherwise, a code is transmitted which indicates that it is a new movement vector which is concerned or, if no movement vector exists, the values for the image points which constitute the macro picture element are transmitted. If the previously transmitted adjoining movement vectors satisfy certain conditions, for example that they are identical and identical with the zero vector, this means that the probability is very high that the current movement vector is also identical with the zero vector. This is exploited by using a variable length-coding, for example arithmetical coding, which makes it possible that an operation with very high probability can be coded with less than one bit per operation, which results in a low bit transmission rate.

### Brief description of the drawings

The invention is described in greater detail below with reference to the accompanying drawings, in which
Fig. 1 shows the standard format for a picture,
Fig. 2 shows a macro picture element according to the invention, and
Fig. 3 shows the positioning of the current macro picture element in relation to adjoining macro picture elements, the movement vectors of which have previously been transmitted.

### Detailed description of the invention

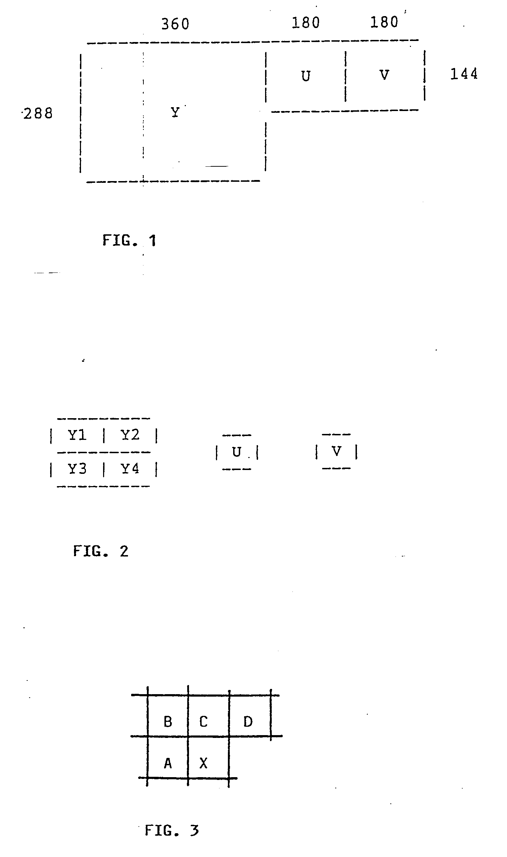

In Fig. 1 the standard format proposed by CCITT for video telephony or video conferences is shown. It comprises a luminance block Y with 288 x 360 image points and two chrominance blocks U and V comprising 144 x 180 image points each.

According to prior art, the luminance block was divided into smaller blocks of 16 x 16 or 8 x 8 image points. If the block size 16 x 16 was used, it was necessary to reduce the picture to 288 x 352 image points. A movement vector was formed for every block. It emerged that the movement vector was zero in approximately 50% of blocks. The information which was to be transmitted was then coded so that the zero vector was coded with one bit while movement vectors differing from the zero vector were coded with 9 bits. With 50% moving blocks, this results in a transmission rate of approximately 2 kbit/picture, that is to say a sufficiently low bit transmission rate to be transmitted on telephone lines. However, the large blocks and the small number of movement vectors resulted in a rough quantization and sometimes unsatisfactory picture quality.

According to the invention, use is made of the knowledge that movement vectors for adjoining blocks are probably identical. By utilizing a coding which makes it possible that operations with high probability can be coded with a bit length shorter than 1, it is possible to divide the picture into smaller elements without the bit transmission rate becoming too high. According to the invention, both luminance blocks and the two chrominance blocks are used. The smallest picture element which corresponds to the same physical picture area comprises, when the above-mentioned standard format is used, four image points from the luminance block Y and one image point each from the chrominance blocks U and V. Such a picture element is here referred to as a macro picture element and is shown in Fig. 2.

According to the invention, a movement vector is thus to be transmitted for each such macro picture element and use is to be made of the fact that one or some of the movement vectors for adjoining macro picture elements are probably identical with the current movement vector. According to a preferred embodiment, the picture is scanned in rows from left to right and from top to bottom, which means that the movement vectors for the macro picture elements A, B, C, D according to Fig. 3, that is to say macro picture elements to the left, diagonally above and to the left, directly above, and diagonally above and to the right respectively of the current picture element X, are already known in the receiver and the transmitter. It must also be possible to transmit information relating to a new movement vector, in a case where none of the movement vectors A, B, C, D, can be used in the current picture element X. If no movement vector exists, it must be possible to transmit the values of all the image points which constitute the macro picture element.

The movement vectors can be formed by means of any process, preferably by means of the process which is described in the patent application called "Process for forming a field of movement vectors for transmitting information relating to moving pictures", which is filed simultaneously with this application and which has the same applicant.

When the movement vectors are transmitted, variable length-coding is used, preferably arithmetical coding of a type known per se. This coding is advantageous because use can be made of statistical dependence between operations. It thus becomes possible to code operations with high probability by means of code words with a bit length shorter than 1.

The selection of movement vectors takes place in a manner which is specific to the invention, starting from the movement vectors in macro picture elements A, B, C, D. Different cases can thus arise:

### 1. Background

The movement vectors in A and C are identical with the zero vector. For the movement vector in X, five different cases can then arise:
a. the movement vector for X is identical with the movement vector in A (is identical with the movement vector in C is identical with the zero vector)
b. the movement vector in X is identical with the movement vector in D
c. the movement vector in X is identical with the movement vector in B
d. the movement vector in X is a new movement vector
e. no movement vector exists in X but the image point values are transmitted.

### 2. Moving object

The movement vector in A is identical with the movement vector in C is different from the zero vector. The following cases can arise for the movement vector in X:
a. the movement vector in X is identical with the movement vector in A
b. the movement vector in X is identical with the movement vector in D
c. the movement vector in X is identical with the movement vector in B
d. the movement vector in X is identical with a new movement vector
e. no movement vector exists in X but the image point values are transmitted.

### 3. Edge of moving object

The movement vector in A is different from the movement vector in C. The following cases are possible in the movement vector in X:
a. the movement vector in X is identical with the movement vector in A
b. the movement vector in X is identical with the movement vector in C
c. the movement vector in X is identical with the movement vector in D
d. the movement vector in X is identical with the movement vector in B
e. the movement vector in X is identical with a new movement vector
f. no movement vector exists in X but the image point values are transmitted.

It is also possible to apply conditions with regard to the movement vectors in B and D in order to make similar groupings.

If the macro picture element X is in the background, that is to say case 1 above, the probability is very high that the movement vector in X is identical with the zero vector. In a computer simulation with a representative picture sequence, the probability was 0.995 that the movement vector in X was identical with the zero vector, that is to say that the movement vector in A should be used. The probability that the movement vector in A is to be used for the movement vector in X during a longer series of macro picture elements in a row is also high. This is exploited by using arithmetical coding. A feature of arithmetical coding is namely that k bits can represent n operations, where k < n. This can be interpreted as meaning that an operation can be coded with a word which is shorter than one bit. The operation in which the movement vector in A is to be used as the movement vector in X has in cases 2 and 3 above the probabilities 0.938 and 0.420 respectively. These operations are thus coded differently from the operation 1a.

The operations which have the greatest bit consumption occur when a new movement vector or an image point value is to be transmitted, since first the operation must be coded and then the vector or the value respectively. As these operations are few, the overall bit consumption nevertheless remains small. In the above computer simulation, the operations 3e and f above had the probabilities 0.065 and 0.011 respectively. Overall it emerged that the image point values need to be transmitted for less than 1% of macro picture elements.

The image point values are transmitted with DPCM (Differential Pulse Code Modulation) coding. In this connection, information relating to the prediction error between pictures which follow one another is transmitted. If necessary, a movement vector, for example the movement vector in the macro picture element D, can be used to form the prediction error. In this, use is made of any movement in the picture, even if it is not sufficient, then, to simply transmit a movement vector. If necessary, it can be calculated which of the movement vectors in A - D is the least unsatisfactory and this movement vector can be used. By these means, however, the bit consumption becomes greater since information relating to which movement vector is being used must be transmitted. If, on the other hand, the movement vector in the macro picture element D is selected, this is understood through the whole transmission.

According to the invention, therefore, a better bit arrangement is achieved, which results in higher picture quality with retained transmission rate.

## Claims

1. A process for transmission of information relating to moving pictures, which are each represented by image points with one block (Y) for the luminance and two blocks (U, V) for the chrominance, wherein each picture is divided into macro picture elements comprising a number of image points which correspond to the same physical picture area from each respective block (Y, U, V), wherein a movement vector if possible is formed for each macro picture element, wherein the picture is scanned in rows from left to right and from top to bottom, and wherein the movement vectors for the macro picture elements (A, B, C, D), which in relation to the current macro picture element (X), lie directly to the left (A), diagonally above and to the left (B), directly above (C), and diagonally above and to the right (D), and which have been scanned before the current macro picture element (X), are compared with each other in order to check whether they satisfy certain conditions, and are compared with the movement vector in the current macro picture element (X) in order to check whether the said vector is identical with any of the movement vectors in the adjoining macro picture elements (A-D) or whether the movement vector in the current macro picture element (X) is identical with another movement vector or whether no movement vector exists in the current macro picture element, **characterized** in that the conditions of the movement vectors in the adjoining macro picture elements (A - D) are:
1. A̅ = C̅ = O̅
2. A̅ = C̅ ≠ O̅
3. A̅ ≠ C̅
where
A̅ is the movement vector in the macro picture element (A) to the left of the current macro picture element,
C̅ is the movement vector in the macro picture element (C) above the current macro picture element, where O̅ is the zero vector, the comparisons between the movement vector of the macro picture element (X) and the movement vectors of the adjoining macro picture elements (A - D) resulting in a number of different events having different probabilities depending on which one of the conditions 1, 2 or 3 is satisfied, said events being coded and transmitted by means of variable length coding utilizing said probabilities.

2. A process for transmission of information relating to moving pictures, which are each represented by image points with one block (Y) for the luminance and two blocks (U, V) for the chrominance, wherein each picture is divided into macro picture elements comprising a number of image points which correspond to the same physical picture area from each respective block (Y, U, V), wherein a movement vector if possible is formed for each macro picture element, wherein the picture is scanned in rows from left to right and from top to bottom, and wherein the movement vectors for the macro picture elements (A, B, C, D), which in relation to the current macro picture element (X), lie directly to the left (A), diagonally above and to the left (B), directly above (C), and diagonally above and to the right (D), and which have been scanned before the current macro picture element (X), are compared with each other in order to check whether they satisfy certain conditions, and are compared with the movement vector in the current macro picture element (X) in order to check whether the said vector is identical with any of the movement vectors in the adjoining macro picture elements (A-D) or whether the movement vector in the current macro picture element (X) is identical with another movement vector or whether no movement vector exists in the current macro picture element, **characterized** in that the conditions of the movement vectors in the adjoining macro picture elements (A - D) are:
1. B̅ = D̅ = O̅
2. B̅ = D̅ ≠ O̅
3. B̅ ≠ D̅
where
B̅ is the movement vector in the macro picture element (B) diagonally above and to the left of the current macro picture element,
D̅ is the movement vector in the macro picture element (D) diagonally above and to the right of the current macro picture element where O̅ is the zero vector, the comparisons between the movement vector of the macro picture element (X) and the movement vectors of the adjoining macro picture elements (A - D) resulting in a number of different events having different probabilities depending on which one of the conditions 1, 2 or 3 is satisfied, said events being coded and transmitted by means of variable length coding utilizing said probabilities.

3. The process as claimed in claim 1 or claim 2, wherein arithmetical coding is used.

4. The process as claimed in any of the preceding claims, wherein each macro picture element comprises the smallest number of bits which corresponds to the same physical picture area from each respective block (Y, U, V).

5. The process as claimed in claim 3, wherein the luminance block (Y) comprises 280 × 360 image points and the two chrominance blocks each comprise 144 × 180 image points, a macro picture element comprising four image points (Y1, Y2, Y3, Y4) from the luminance block and one point (U, V) from each of the chrominance blocks.

## Patentansprüche

1. Verfahren zum Übertragen von Information, die sich auf bewegte Bilder bezieht, die durch Bildpunkte mit einem Block (Y) für die Luminanz und zwei Blöcken (U, V) für die Chrominanz dargestellt sind, wobei jedes Bild in Makrobildelemente aufgeteilt ist, die eine Anzahl von Bildpunkten aufweisen, die demselben physikalischen Bildbereich von jedem entsprechenden Block (Y, U, V) entsprechen, wobei falls möglich ein Bewegungsvektor für jedes Makrobildelement gebildet wird, wobei das Bildelement in Reihen von links nach rechts und von oben nach unten abgetastet wird, und wobei die Bewegungsvektoren für die Makrobildelemente (A, B, C, D), die in Bezug auf das aktuelle Makrobildelement (X) direkt links davon (A), diagonal oberhalb und links davon (B), direkt oberhalb (C) sowie diagonal oberhalb und rechts davon (D) liegen, und die vor dem aktuellen Makrobildelement (X) abgetastet worden sind, miteinander verglichen werden, um zu prüfen, ob sie gewisse Bedingungen erfüllen, und mit dem Bewegungsvektor im aktuellen Makrobildelement (X) verglichen werden, um zu prüfen, ob dieser Vektor identisch mit irgendeinem der Bewegungsvektoren in den benachbarten Makrobildelementen (A-D) ist oder ob der Bewegungsvektor im aktuellen Bewegungselement (X) identisch mit einem anderen Bewegungsvektor ist oder ob kein Bewegungsvektor im aktuellen Makrobildelement existiert, dadurch gekennzeichnet, daß die Bedingungen der Bewegungsvektoren in den benachbarten Makrobildelementen (A-D) sind:
1. A̅ = C̅ = 0̅
2. A̅ = C̅ ≠ 0̅
3. A̅ ≠ C̅
wobei A̅ der Bewegungsvektor im Makrobildelement (A) links vom aktuellen Makrobildelement, C̅ der Bewegungsvektor im Makrobildelement (C) oberhalb des aktuellen Makrobildelementes, wobei 0̅ der Nullvektor ist, wobei die Vergleiche zwischen dem Bewegungsvektor des Makrobildelementes (X) und den Bewegungsvektoren der benachbarten Makrobildelemente (A-D) zu einer Anzahl von unterschiedlicher Ereignissen mit unterschiedlichen Wahrscheinlichkeiten in Abhängigkeit davon führen, welche der Bedingungen 1, 2 oder 3 erfüllt ist, wobei die Ereignisse mittels Codierung variabler Länge unter Verwendung der Wahrscheinlichkeiten codiert und übertragen werden.

2. Verfahren zum Übertragen von Information, die sich auf bewegte Bilder bezieht, die durch Bildpunkte mit einem Block (Y) für die Luminanz und zwei Blöcken (U, V) für die Chrominanz dargestellt sind, wobei jedes Bild in Makrobildelemente aufgeteilt ist, die eine Anzahl von Bildpunkten aufweisen, die demselben physikalischen Bildbereich von jedem entsprechenden Block (Y, U, V) entsprechen, wobei falls möglich ein Bewegungsvektor für jedes Makrobildelement gebildet wird, wobei das Bildelement in Reihen von links nach rechts und von oben nach unten abgetastet wird, und wobei die Bewegungsvektoren für die Makrobildelemente (A, B, C, D), die in Bezug auf das aktuelle Makrobildelement (X) direkt links davon (A), diagonal oberhalb und links davon (B), direkt oberhalb (C) sowie diagonal oberhalb und rechts davon (D) liegen, und die vor dem aktuellen Makrobildelement (X) abgetastet worden sind, miteinander verglichen werden, um zu prüfen, ob sie gewisse Bedingungen erfüllen, und mit dem Bewegungsvektor im aktuellen Makrobildelement (X) verglichen werden, um zu prüfen, ob dieser Vektor identisch mit irgendeinem der Bewegungsvektoren in den benachbarten Makrobildelementen (A-D) ist oder ob der Bewegungsvektor im aktuellen Bewegungselement (X) identisch mit einem anderen Bewegungsvektor ist oder ob kein Bewegungsvektor im aktuellen Makrobildelement existiert, dadurch gekennzeichnet, daß die Bedingungen der Bewegungsvektoren in den benachbarten Makrobildelementen (A-D) sind:
1. B̅ = D̅ = 0̅
2. B̅ = D̅ ≠ 0̅
3. B̅ ≠ D̅
wobei B̅ der Bewegungsvektor des Makrobildelementes (B) diagonal oberhalb und links vom aktuellen Makrobildelement, D̅ der Bewegungsvektor im Makrobildelement (D) diagonal oberhalb und rechts von dem aktuellen Makrobildelement, wobei 0̅ der Nullvektor ist, wobei die Vergleiche zwischen dem Bewegungsvektor des Makrobildelementes (X) und den Bewegungsvektoren der benachbarten Makrobildelemente (A-D) zu einer Anzahl von unterschiedlicher Ereignissen mit unterschiedlichen Wahrscheinlichkeiten in Abhängigkeit davon führen, welche der Bedingungen 1, 2 oder 3 erfüllt ist, wobei die Ereignisse mittels Codierung variabler Länge unter Verwendung der Wahrscheinlichkeiten codiert und übertragen werden.

3. Verfahren nach Anspruch 1 oder. 2, bei dem arithmetisches Codieren verwendet wird.

4. Verfahren nach einem der vorangehenden Ansprüche, bei dem jedes Makrobildelement die kleinste Anzahl von Bits umfaßt, die demselben physikalischen Bildbereich von jedem Block (Y, U, V) entspricht.

5. Verfahren nach Anspruch 3, bei dem der Luminanzblock (Y) 280 x 360 Bildpunkte und die beiden Chrominanzblöcke je 144 x 180 Bildpunkte aufweisen, wobei ein Makrobildelement vier Bildpunkte (Y1, Y2, Y3, Y4) vom Luminanzblock und einen Punkt (U, V) von jedem der Chrominanzblöcke aufweist.

## Revendications

1. Procédé de transmission d'information relative à des images animées, qui sont chacune représentées par des points d'image avec un bloc (Y) pour la luminance et deux blocs (U, V) pour la chrominance, dans lequel chaque image est divisée en éléments d'image macro comprenant plusieurs points d'image qui correspondent à la même région physique d'image provenant de chaque bloc respectif (Y, U, V), dans lequel un vecteur de mouvement si possible est formé pour chaque élément d'image macro, dans lequel l'image est balayée par lignes de gauche à droite et de haut en bas, et dans lequel les vecteurs de mouvement pour les éléments d'image macro (A, B, C, D), qui par rapport à l'élément d'image macro courant (X), se trouvent directement à gauche (A), au-dessus en diagonale et à gauche (B), directement au-dessus (C), et au-dessus en diagonale et à droite (D), et qui ont été balayés avant l'élément d'image macro courant (X), sont comparés entre eux dans le but d'examiner s'ils satisfont certaines conditions, et sont comparés avec le vecteur de mouvement dans l'élément d'image macro courant (X) dans le but d'examiner si ledit vecteur est égal à l'un quelconque des vecteurs de mouvement dans les éléments d'image macro adjacents (A à D) ou si le vecteur de mouvement dans l'élément d'image macro courant (X) est égal à un autre vecteur de mouvement ou s'il n'y a pas de vecteur de mouvement dans l'élément d'image macro courant, caractérisé en ce que les conditions des vecteurs de mouvement dans les éléments d'image macro adjacents (A à D) sont :
1. A̅ = C̅ = 0
2. A̅ = C̅ ≠ 0
3. A̅ ≠ C̅
où
A̅ est le vecteur de mouvement dans l'élément d'image macro (A) à gauche de l'élément d'image macro courant,
C̅ est le vecteur de mouvement dans l'élément d'image macro (C) au-dessus de l'élément d'image macro courant, 0̅ étant le vecteur nul, les comparaisons entre le vecteur de mouvement de l'élément d'image macro (X) et les vecteurs de mouvement des éléments d'image macro adjacents (A à D) aboutissant à plusieurs événements différents ayant différentes probabilités selon que la condition 1, 2 ou 3 est satisfaite, lesdits événements étant codés et transmis au moyen d'un codage de longueur variable utilisant lesdites probabilités.

2. Procédé de transmission d'information relative à des images animées, qui sont chacune représentées par des points d'image avec un bloc (Y) pour la luminance et deux blocs (U, V) pour la chrominance, dans lequel chaque image est divisée en éléments d'image macro comprenant plusieurs points d'image qui correspondent à la même région physique d'image provenant de chaque bloc respectif (Y, U, V), dans lequel un vecteur de mouvement si possible est formé pour chaque élément d'image macro, dans lequel l'image est balayée par lignes de gauche à droite et de haut en bas, et dans lequel les vecteurs de mouvement pour les éléments d'image macro (A, B, C, D), qui par rapport à l'élément d'image macro courant (X), se trouvent directement à gauche (A), au-dessus en diagonale et à gauche (B), directement au-dessus (C), et au-dessus en diagonale et à droite (D), et qui ont été balayés avant l'élément d'image macro courant (X), sont comparés entre eux dans le but d'examiner s'ils satisfont certaines conditions, et sont comparés avec le vecteur de mouvement dans l'élément d'image macro courant (X) dans le but d'examiner si ledit vecteur est égal à l'un quelconque des vecteurs de mouvement dans les éléments d'image macro adjacents (A à D) ou si le vecteur de mouvement dans l'élément d'image macro courant (X) est égal à un autre vecteur de mouvement ou s'il n'y a pas de vecteur de mouvement dans l'élément d'image macro courant, caractérisé en ce que les conditions des vecteurs de mouvement dans les éléments d'image macro adjacents (A à D) sont :
1. B̅ = D̅ = 0
2. B̅ = D̅ ≠ 0
3. B̅ ≠ D̅
où
B̅ est le vecteur de mouvement dans l'élément d'image macro (b) au-dessus en diagonale et à gauche de l'élément d'image macro courant,
D̅ est le vecteur de mouvement dans l'élément d'image macro (D) au-dessous en diagonale et à droite de l'élément d'image macro courant, 0̅ étant le vecteur nul, les comparaisons entre le vecteur de mouvement de l'élément d'image macro (X) et les vecteurs de mouvement des éléments d'image macro adjacents (A à D) aboutissant à plusieurs événements différents ayant différentes probabilités selon que la condition 1, 2 ou 3 est satisfaite, lesdits événements étant codés et transmis au moyen d'un codage de longueur variable utilisant lesdites probabilités.

3. Procédé selon la revendication 1 ou la revendication 2, dans lequel on utilise un codage arithmétique.

4. Procédé selon l'une quelconque des revendications précédentes, dans lequel chaque élément d'image macro comprend le plus petit nombre de bits qui correspond à la même région physique d'image provenant de chaque bloc respectif (Y, U, V).

5. Procédé selon la revendication 3, dans lequel le bloc de luminance (Y) comprend 280 x 360 points d'image et les deux blocs de chrominance comprennent chacun 144 x 180 points d'image, un élément d'image macro comprenant quatre points d'image (Y1, Y2, Y3, Y4) provenant du bloc de luminance et un point (U, V) provenant de chacun des blocs de chrominance.
